# EUROPÄISCHE PATENTSCHRIFT

(11) **EP 3 534 225 B1**
(45) Veröffentlichungstag und Bekanntmachung des Hinweises auf die Patenterteilung: **09.02.2022**
(21) Anmeldenummer: 18159717.0
(22) Anmeldetag: 02.03.2018
(51) Int. Cl.: G05B 19/042

(54) **BAUGRUPPE FÜR DIE INDUSTRIELLE PROZESSAUTOMATISIERUNG UND VERFAHREN ZUM BETRIEB UND PROJEKTIERUNG**
MODULE FOR INDUSTRIAL PROCESS AUTOMATION AND METHOD FOR OPERATING AND PROJECT DESIGN
GROUPE D'ASSEMBLAGE POUR L'AUTOMATISATION DE PROCESSUS INDUSTRIELLE ET PROCÉDÉS DE FONCTIONNEMENT ET DE CONCEPTION

(43) Veröffentlichungstag der Anmeldung: 04.09.2019
(73) Patentinhaber: Siemens Aktiengesellschaft, 80333 München (DE)
(72) Erfinder: Röhle, Holger, 09235 Burkhardtsdorf (DE)

(56) Entgegenhaltungen:
- DE-A1-102010 027 963
- US-A1- 2013 124 575

## Beschreibung

Die Erfindung betrifft eine Baugruppe für die industrielle Prozessautomatisierung zur Erfassung von Messwerten umfassend, eine Schnittstelle zur Kommunikation mit anderen Baugruppen und/oder einer übergeordneten Steuerung, einen Mikrocontroller, Anschlüsse für Messleitungen, zumindest einen Analog-Digital-Umsetzer, wobei der Mikrocontroller ausgestaltet ist, in einem Messwertdatensatz oder in mehreren Messwertdatensätzen die über den Analog-Digital-Umsetzer gebildeten Messwerte abzuspeichern, wobei der Mikrocontroller weiterhin ausgestaltet ist, aus den Messwerten anhand von Berechnungsvorschriften weitere die Messwerte betreffende Parameter oder Kenngrößen zu berechnen und diese in die Messwertdatensätzen abzuspeichern.

Des Weiteren betrifft die Erfindung ein Verfahren zum Projektieren einer Baugruppe für die industrielle Prozessautomatisierung zur Erfassung von Messwerten mit einem Projektierungswerkzeug und zum Anschließen und Betreiben der Baugruppe, dabei werden in der Baugruppe über einen Analog-Digital-Umsetzer gebildete Messwerte über einen Mikrocontroller in einen Messwertdatensatz oder in mehrere Messwertdatensätze abgespeichert, und zusätzlich werden aus den Messwerten anhand von Berechnungsvorschriften weitere die Messwerte betreffende Parameter oder Kenngrößen berechnet und diese ebenfalls in die Messwertdatensätze abgespeichert.

Insbesondere in der industriellen Prozessautomatisierung können komplexe Messsysteme eine Vielzahl von Daten und Messwerten liefern. Ein Anwender hat - entsprechend seines konkreten Anwendungsfalles - sehr unterschiedliche Anforderungen, welche Messwerte oder Daten er aus der großen Menge von Messwerten gerade für seinen Anwendungsfall benötigt.

Eine der Anmelderin bekannte Messbaugruppe hat ein Interface für zyklische Eingangsdaten oder Ausgangsdaten mit einer festgelegten Länge (z.B. 32 Bit Input) und einem festen Aufbau. Zusätzliche Messdaten sind in der Regel nur durch zusätzliche Transportprotokolle (z.B. Dataset, Fieldbus) azyklisch abrufbar. Und selbst diese Vorgehensweise kann nur eine Minderzahl von Messwerten abdecken und liefert wieder in der Regel eine fest definierte Datenstruktur. Bei der bekannten Messbaugruppe steht ein Adressraum, beispielsweise für ein Analogeingabemodul AI 4xI 2-/4-wire ST zur Verfügung. Der Adressraum stellt beispielsweise acht Eingangsbyte zur Verfügung. Somit stehen Eingabewerte oder Ausgabewerte für einen Kanal 0 bis Kanal 3 zur Verfügung.

Weiterhin ist aus der DE 10 2010027 963 A1 ein Verfahren zum Betreiben eines Feldgerätes bekannt, wobei Parameter des Feldgerätes auf eine Änderung hin überwacht werden.

Die US 2013/124575 A1 offenbart ein Automatisierungsgerät, bei dem Messdaten um Metadaten angereichert werden.

Es ist Aufgabe der vorliegenden Erfindung, für eine bestehende Baugruppe, welche für einen Anwender in der Prozessautomatisierung eine Vielzahl von Parametern und Messgrößen bereitstellt, eine vereinfachte Möglichkeit zu schaffen, sich für seinen speziellen Anwendungsfall die zugehörigen Messgrößen bereitzustellen.

Für die eingangs genannte Baugruppe wird die Erfindung dadurch gelöst, dass die Messwertdatensätze zu jedem Messwert und Parameter oder Kenngröße eine Kennung aufweisen und das eine Zuordnungstabelle für zyklische Daten und eine Zuordnungstabelle für azyklische Daten vorhanden ist, wobei die Schnittstelle und der Mikrocontroller weiterhin derart ausgestaltet sind, dass über ein Projektierungswerkzeug eine von einem Projekteur erstellte Umsetzvorschrift ladbar ist, und das weiterhin mit der Umsetzvorschrift von der Datenstruktur der Messwertdatensätze eine anwenderdefinierte Datenstruktur für die Zuordnungstabelle für zyklische Daten und eine anwenderdefinierte Datenstruktur für die Zuordnungstabelle für azyklische Daten erzeugbar ist, wobei ein Prozessabbildspeicher vorhanden ist, aus welchen die anwenderdefinierten Datenstrukturen auslesbar sind, wobei der Mikrocontroller weiterhin derart ausgestaltet ist, die anwenderdefinierten Daten aus den Zuordnungstabellen in den Prozessabbildspeicher zu kopieren.

Mit Vorteil hat man nun eine einheitliche Regel bzw. eine einheitliche Projektierungsvorschrift für alle Messwerte, welche die Baugruppe bereitstellt, erfunden. Mit dieser Erfindung sind nach einer einheitlichen Regel über die Nutzung der Messwert-Kennungen alle Messwerte ansprechbar. Dabei ist es unerheblich, ob die Baugruppe 100 oder 600 unterschiedliche Messwerte bereitstellt. Für einen Anlagenbetreiber ist es nun möglich, seine zyklisch zu prüfenden Hauptmesswerte speziell nach seinen Anforderungen variabel zu projektieren. Die Eingangslängen und die Projektierung des Aufbaus werden in den Zuordnungstabellen festgelegt.

Eine Weiterbildung der Baugruppe sieht vor, mehrere Zuordnungstabellen für zyklische Daten und mehrere Zuordnungstabellen für azyklische Daten in der Baugruppe bereitzustellen, wobei die Zuordnungstabellen einen Zuordnungstabellen-Index aufweisen, welcher von einem Anwender abfragbar bzw. vorgebbar, dabei ist der Mikrocontroller weiterhin derart ausgestaltet, dass nur die jeweils über den Zuordnungstabellen-Index abgefragte Zuordnungstabelle in den Prozessabbildspeicher kopiert wird.

Weiterhin ist es insbesondere für azyklische Daten von Vorteil, wenn eine Datenblocksendeeinrichtung vorhanden ist, welche ausgestaltet ist, eine anwenderspezifische Datenstruktur als azyklische Daten aus der Zuordnungstabelle auf Anfrage zu senden. Dabei ist es weiterhin vorteilhaft, wenn die anwenderspezifische Datenstruktur nach dem OPC UA Kommunikationsmodell aufgebaut ist.

Für das eingangs genannte Verfahren wird die Aufgabe dadurch gelöst, dass in dem Projektierungswerkzeug zu den Messwertdatensätzen für jeden Messwert und Parameter oder Kenngröße eine Kennung angezeigt wird, wobei der Projekteur Daten aus mehreren, gegebenenfalls unterschiedlichen, Messwertdatensätzen und somit unterschiedlich strukturierten Datenquellen auswählt und in Zuordnungstabellen für anwenderdefinierte Datenstrukturen vereinigt und die anwenderdefinierten Datenstrukturen anhand einer Umsetzvorschrift in ein Prozessabbildspeicher gespeichert werden, über welchen diese ausgelesen werden.

Weiterhin sieht das Verfahren vor, mehrere Zuordnungstabellen zu verwenden, und den Zuordnungstabellen ein Zuordnungstabellen-Index zuzuordnen, welcher von einem Anwender abgefragt wird bzw. vorgegeben werden kann, und dadurch kann nur die jeweils über den Zuordnungstabellen-Index abgefragte Zuordnungstabelle in den Prozessabbildspeicher kopiert werden.

Um einen Projekteur das Projektieren der Baugruppe mit der Vielzahl von Messwerten zu vereinfachen, ist vorgesehen, im Projektierungswerkzeug ein grafisches Werkzeug zu verwenden um es dem Projekteur zu ermöglichen, Linien zwischen den Feldern der Datenstruktur von den Messwertdatensätzen zu Feldern der anwenderdefinierten Datenstrukturen zu ziehen und somit die Umsetzvorschrift und/oder die Zuordnungstabellen zu bilden. Derartige Zuordnungswerkzeuge könnten auch per Knopfdruck automatisch die Beziehung der Felder aufgrund ihrer Namen und Wertebereiche erkennen. Aus den definierten Beziehungen generieren diese Programme beispielsweise automatisch einen OPC UA Datenstrukturcode. Derartige Werkzeuge sind meist Bestandteil von ETL-Werkzeugen (ETL: Datenfluss und unterstützende Programmextraktion). Extrakt, transform, Load (ETL) ist ein Prozess, bei denen Daten aus mehreren gegebenenfalls unterschiedlich strukturierten Datenquellen in einer Zieldatenbank vereinigt werden.

In der Zeichnung wird ein mögliches Ausführungsbeispiel beschrieben. Es zeigt:
- FIG 1: eine Baugruppe zur Erfassung von Messwerten,
- FIG 2: die aus FIG 1 bekannte Baugruppe in einem Verbund mit einem Projektierungswerkzeug und einer übergeordneten Steuerung und
- FIG 3: eine Prinzipskizze des Abbildens der Datenstrukturen auf anwenderspezifische Datenstrukturen.

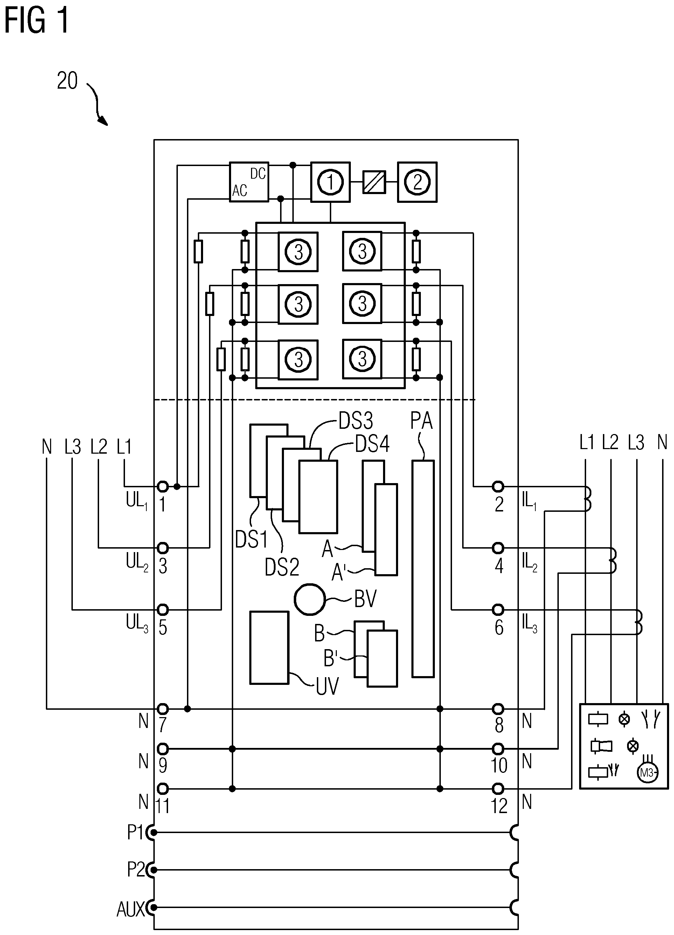

Gemäß FIG 1 ist eine Baugruppe 20 für die industrielle Prozessautomatisierung zur Erfassung von Messwerten UL1,IL1;UL2, IL2;UL3,IL3 dargestellt. Die analog erfassten Messwerte von Spannung und Strom werden innerhalb der Baugruppe durch mehrere Analog-Digital-Umsetzer 3 in digitale Werte umgesetzt.

Über einen Mikrocontroller 1 ist es in der Baugruppe 20 möglich, die umgesetzten digitalisierten Messwerte in einem ersten Messwertdatensatz DS1, einem zweiten Messwertdatensatz DS2, einem dritten Messwertdatensatz DS3 und in einem vierten Messwertdatensatz DS4 abzuspeichern. Bei der Baugruppe 20 handelt es sich um eine intelligente Technologiebaugruppe, mit welcher es möglich ist aus den erfassten Grundmesswerten von Spannung und Strom zusätzlich Phasenwinkel, Leistungen, Energie/elektrische Arbeit, Frequenzen, Minimal- und Maximalwerte, Leistungsfaktoren, Betriebsstunden, Grenzwerte usw. zu errechnen. Die genannten zusätzlichen Werte entsprechenden Parametern oder Kenngrößen, welche aufgrund der Berechnungsvorschriften BV innerhalb der Baugruppe 20 ermittelt werden und ebenfalls in den Messwertdatensätzen DS1,...,DS4 abgespeichert werden. Mit der Berechnungsvorschrift BV entstehen somit leicht eine Vielzahl von Messwerten bzw. Kennwerten und Parametern, welche ein Anwender für seinen spezifischen Anwendungsfall nicht unbedingt alle benötigt.

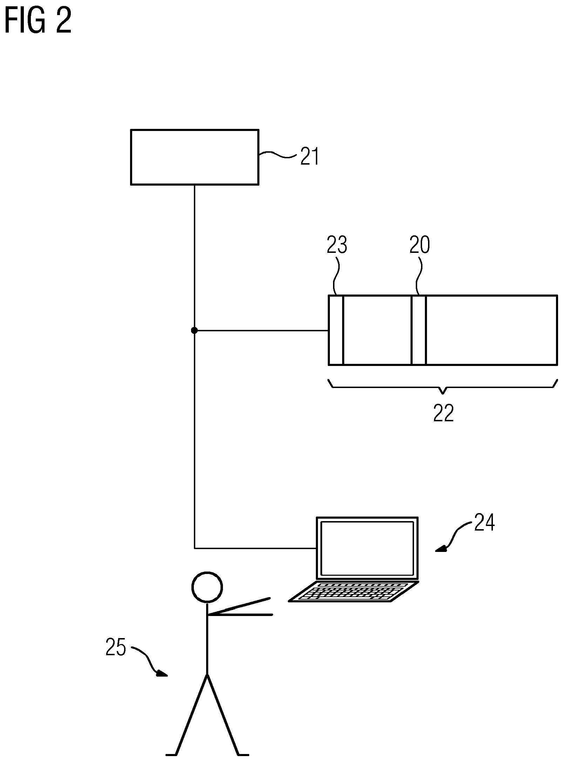

Um es einem Anwender leichter zu machen, ist die Baugruppe jetzt dementsprechend derart weitergebildet, dass die Messwertdatensätze DS1,...,DS4 zu jedem Messwert und Parameter oder Kenngröße eine Kennung ID aufweisen. Weiterhin weist die Baugruppe 20 eine Zuordnungstabelle A für zyklische Daten und eine Zuordnungstabelle B für azyklische Daten auf. Eine Schnittstelle 2 arbeitet mit dem Mikrocontroller 1 derart zusammen, dass ein Projekteur 25 (siehe FIG 2) mit einem Projektierungswerkzeug 24 eine Umsetzvorschrift UV erzeugt und diese über die Schnittstelle 2 in die Baugruppe 20 lädt. Mit Hilfe der Umsetzvorschrift UV und der Zuordnungstabelle A können nun anwenderspezifische Daten in einen Prozessabbildspeicher PA geladen werden. Der Prozessabbildspeicher PA kann wiederum von dem Mikroprozessor 1 ausgelesen werden und die Prozessabbilddaten über die Schnittstelle 2 weiteren Teilnehmern oder einer übergeordneten Steuereinrichtung 21 bereitstellen.

Im speziellen ist die Baugruppe 20 als ein Energymeter für einen maschinennahen Einsatz in einem dezentralen Peripheriesystem konzipiert. Das Energymeter erfasst verschiedene elektrische Mess- und Energiewerte.

Gemäß FIG 2 ist der Einsatz der Baugruppe 20 innerhalb eines dezentralen Peripheriesystems 22 gezeigt. Das dezentrale Peripheriesystem 22 ist über eine Busanschaltung 23 mit einem Feldbus 26 verbunden. Der Feldbus 26 wiederum ist mit einer übergeordneten Steuereinrichtung 21 und einem Projektierungswerkzeug 24 verbunden.

Das Projektierungswerkzeug 24 wird von einem Projekteur 25 verwendet. In dem Projektierungswerkzeug 24 werden zu den Messwertdatensätzen DS1,...,DS4 für jeden Messwert und Parameter oder Kenngröße eine Kennung ID angezeigt. Der Projekteur 25 kann nun Daten aus mehreren, gegebenenfalls unterschiedlichen, Messwertdatensätzen DS1,...,DS4 und somit aus unterschiedlich strukturierten Datenquellen auswählen und anwenderspezifisch in einer Zuordnungstabelle A,A' für anwenderdefinierte Datenstrukturen vereinigen. Die anwenderdefinierten Datenstrukturen werden dann anhand einer Umsetzvorschrift UV in der Baugruppe 20 in ein Prozessabbildspeicher PA gespeichert.

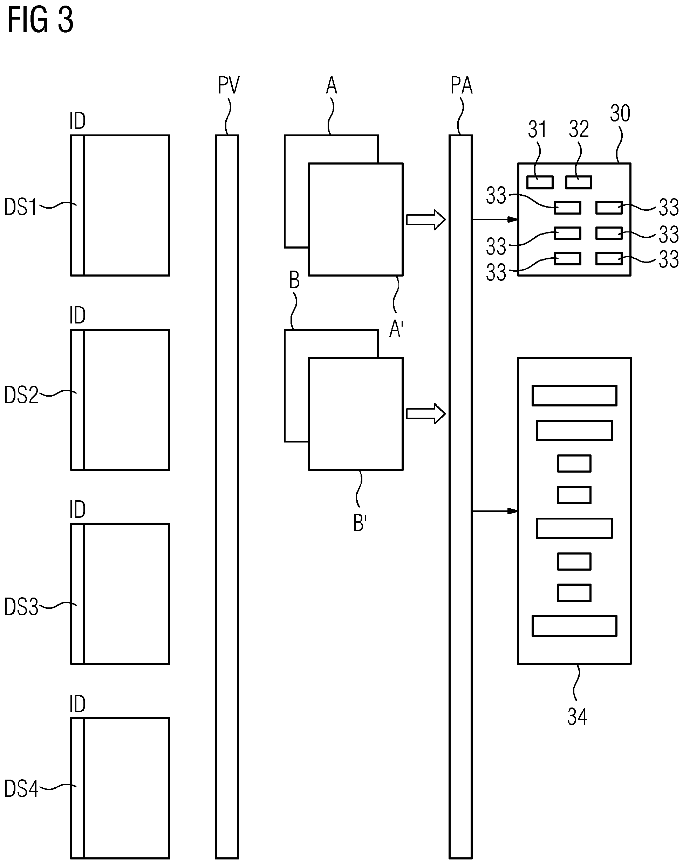

Die FIG 3 zeigt das Umsetzen von Datenstruktur im Prinzip. In den Messwertdatensätzen DS1,...,DS4 sind eine Vielzahl von Messwerten, Parametern und Kenngrößen gespeichert. Ein Anwender einer industriellen Automatisierungsanlage benötigt in der Regel nur einen Teil dieser Messwerte. Ein Projekteur 25 kann nun mit Hilfe des Projektierungswerkzeuges 24 in einem Projektierungsvorgang PV sich diejenigen Messwerte und Datenstrukturen anhand der ID heraussuchen und in die Zuordnungstabelle A für zyklische Daten und in die Zuordnungstabelle B für azyklische Daten parametrieren oder konfigurieren. Die in den Zuordnungstabellen A,B hinterlegten Daten werden mit Hilfe einer Umsetzvorschrift UV in ein Prozessabbild PA kopiert und beispielsweise auf einem HMI Gerät in einem Anzeigefeld 30 einen Maschinenbediener angezeigt. Das Anzeigefeld 30 weist dazu Ausgabefelder 33 auf. Als eine Besonderheit sieht das Anzeigefeld 30 eine erste Schaltfläche 31 und eine zweite Schaltfläche 32 vor. Mit der ersten Schaltfläche 31 wählt ein Anlagenbediener einen zuvor festgelegten Zuordnungstabellen-Index ZI aus, dann bekommt er in seinem Anzeigefeld 30 die Datenstruktur angezeigt, welche in der ersten Zuordnungstabelle A hinterlegt ist und wenn er die zweite Schaltfläche 32 anwählt, so wählt er beispielsweise einen Zuordnungstabellen-Index ZI = 2 aus und er bekommt in seinem Anzeigefeld 30 die strukturierten Daten angezeigt, welche in der zweiten Zuordnungstabelle A' hinterlegt sind.

In der Zuordnungstabelle B für azyklische Daten sind vorteilhafter Weise Datenstrukturen, wie im Datenformat der OPC UA Specification vorgesehen, hinterlegt. Auch diese Datenstrukturen können auf ein HMI Gerät als komplette Datenstruktur 34 angezeigt werden.

## Patentansprüche

1. Baugruppe (20) für die industrielle Prozessautomatisierung zur Erfassung von Messwerten (UL1,IL1) umfassend,
eine Schnittstelle (2) zur Kommunikation mit anderen Baugruppen und/oder einer übergeordneten Steuerung (21),
einen Mikrocontroller (1),
Anschlüsse (1,3,5;2,4,6) für Messleitungen,
zumindest einen Analog-Digital-Umsetzer (3),
wobei der Mikrocontroller (1) ausgestaltet ist in einem Messwertdatensatz (DS1) oder in mehreren Messwertdatensätzen (DS1,...,DS4) die über den Analog-Digital-Umsetzer (3) gebildeten Messwerte (UL1,IL1) abzuspeichern, wobei der Mikrocontroller (1) weiterhin ausgestaltet ist, aus den Messwerten (UL1,IL1) anhand von Berechnungsvorschriften (BV) weitere die Messwerte (UL₁,IL₁) betreffende Parameter oder Kenngrößen zu berechnen und diese in die Messwertdatensätze (DS1,...,DS4) abzuspeichern,
**dadurch gekennzeichnet, dass** die Messwertdatensätze (DS1,...,DS4) zu jedem Messwert (UL1,IL1) und Parameter oder Kenngröße eine Kennung (ID) aufweisen und das eine Zuordnungstabelle (A) für zyklische Daten und eine Zuordnungstabelle (B) für azyklische Daten vorhanden ist, wobei die Schnittstelle (2) und der Mikrocontroller (1) weiterhin derart ausgestaltet sind, dass über ein Projektierungswerkzeug (24) eine von einem Projekteur (25) erstellte Umsetzvorschrift (UV) ladbar ist und das weiterhin mit der Umsetzvorschrift (UV) von einer Datenstruktur der Messwertdatensätze (DS1,...,DS4) eine anwenderdefinierte Datenstruktur für die Zuordnungstabelle (A) für zyklische Daten und eine anwenderdefinierte Datenstruktur für die Zuordnungstabelle (B) für azyklische Daten erzeugbar ist, wobei ein Prozessabbildspeicher (PA) vorhanden ist, aus welchen die anwenderdefinierten Datenstrukturen auslesbar sind, wobei der Mikrocontroller (1) weiterhin derart ausgestaltet ist, die anwenderdefinierten Daten aus den Zuordnungstabellen (A,B) in den Prozessabbildspeicher (PA) zu kopieren.

2. Baugruppe (20) nach Anspruch 1, aufweisend mehrere Zuordnungstabellen (A,A') für zyklische Daten und mehrere Zuordnungstabellen (B,B') für azyklische Daten, wobei die Zuordnungstabellen (A,A',B,B') einen Zuordnungstabellen-Index (ZI) aufweisen, welcher von einem Anwender abfragbar ist, dabei ist der Mikrocontroller (1) weiterhin derart ausgestaltet, dass nur die jeweils über den Zuordnungstabellen-Index (ZI) abgefragte Zuordnungstabelle (A,A') in den Prozessabbildspeicher (PA) kopiert wird.

3. Baugruppe (20) nach Anspruch 1 oder 2, wobei eine Datenblocksendeeinrichtung (DBS) vorhanden ist, welche ausgestaltet ist, eine anwenderspezifische Datenstruktur als azyklische Daten aus der Zuordnungstabelle (B) auf Anfrage zu senden.

4. Baugruppe (20) nach Anspruch 3, wobei die anwenderspezifische Datenstruktur nach dem OPC UA Kommunikationsmodell aufgebaut ist.

5. Verfahren zum Projektieren einer Baugruppe (20) für die industrielle Prozessautomatisierung zur Erfassung von Messwerten (UL1,IL1) mit einem Projektierungswerkzeug (24) und anschließendem Betreiben der Baugruppe (20), dabei werden in der Baugruppe (20) über einen Analog-Digital-Umsetzer (3) gebildete Messwerte (UL1,IL1) über einen Mikrocontroller (1) in einen Messwertdatensatz (DS1) oder in mehreren Messwertdatensätzen (DS1,...,DS4) abgespeichert und zusätzlich werden aus den Messwerten (UL1,IL1) anhand von Berechnungsvorschriften (BV) weitere die Messwerte (UL₁,IL₁) betreffende Parameter oder Kenngrößen berechnet und diese ebenfalls in die Messwertdatensätze (DS1,...,DS4) abgespeichert,
**dadurch gekennzeichnet, dass** in dem Projektierungswerkzeug (25) zu den Messwertdatensätzen (DS1,...,DS4) für jeden Messwert (UL1,IL1) und Parameter oder Kenngröße eine Kennung (ID) angezeigt wird,
wobei der Projekteur (25) Daten aus mehreren, gegebenenfalls unterschiedlichen, Messwertdatensätzen (DS1,...,DS4) und somit unterschiedlich strukturierten Datenquellen auswählt und in Zuordnungstabellen (A,A') für anwenderdefinierte Datenstrukturen vereinigt, und die anwenderdefinierten Datenstrukturen anhand einer Umsetzvorschrift (UV) in einen Prozessabbildspeicher (PA) gespeichert werden, über welchen diese ausgelesen werden.

6. Verfahren nach Anspruch 5, wobei mehrere Zuordnungstabellen (A,A') verwendet werden und den Zuordnungstabellen ein Zuordnungstabellen-Index (ZI) zugeordnet wird, welcher von einem Anwender abgefragt wird, und dadurch nur die jeweils über den Zuordnungstabellen-Index (ZI) abgefragte Zuordnungstabelle (A,A') in den Prozessabbildspeicher (PA) kopiert wird.

7. Verfahren nach Anspruch 5 oder 6, wobei in dem Projektierungswerkzeug (24) ein grafisches Werkzeug verwendet wird um es dem Projekteur (25) zu ermöglichen Linien zwischen Feldern der Datenstruktur von den Messwertdatensätzen (DS1,...,DS4) zu Feldern der anwenderdefinierten Datenstrukturen zu ziehen und somit die Umsetzvorschrift (UV) und oder die Zuordnungstabellen (A,A') zu bilden.

## Claims

1. Module (20) for industrial process automation for acquiring measured values (UL1,IL1), comprising
an interface (2) for communication with other modules and/or a higher-level controller (21),
a microcontroller (1),
terminals (1,3,5;2,4,6) for measurement lines,
at least one analogue-digital converter (3),
wherein the microcontroller (1) is designed to store the measured values (UL1,IL1) formed via the analogue-digital converter (3) in a measured value dataset (DS1) or in a plurality of measured value datasets (DS1,...,DS4), wherein the microcontroller (1) is furthermore designed to calculate further parameters or characteristic variables relating to the measured values (UL₁,IL₁) from the measured values (UL1,IL1) on the basis of calculation rules (BV) and to store said parameters or characteristic variables in the measured value datasets (DS1,...,DS4),
**characterised in that**
the measured value datasets (DS1,...,DS4) have an identifier (ID) for each measured value (UL1,IL1) and parameter or characteristic variable, and that an assignment table (A) for cyclical data and an assignment table (B) for acyclical data are present, wherein the interface (2) and the microcontroller (1) are furthermore designed such that a conversion rule (UV) created by a configurer (25) can be loaded via a configuration tool (24), and that furthermore a user-defined data structure for the assignment table (A) for cyclical data and a user-defined data structure for the assignment table (B) for acyclical data can be generated from the data structure of the measured value datasets (DS1,...,DS4) using the conversion rule (UV), wherein a process map memory (PA) is present, from which the user-defined data structures can be read, wherein the microcontroller (1) is furthermore designed to copy the user-defined data from the assignment tables (A, B) into the process map memory (PA).

2. Module (20) according to claim 1, having a plurality of assignment tables (A, A') for cyclical data and a plurality of assignment tables (B, B') for acyclical data, wherein the assignment tables (A, A', B, B') have an assignment table index (ZI), which can be queried by a user, in which case the microcontroller (1) is furthermore designed such that only the assignment table (A, A') queried via the assignment table index (ZI) in each case is copied into the process map memory (PA) .

3. Module (20) according to claim 1 or 2, wherein a data block transmitting facility (DBS) is present, which is designed to transmit a user-specific data structure as acyclical data from the assignment table (B) on request.

4. Module (20) according to claim 3, wherein the user-specific data structure is structured according to the OPC UA communication model.

5. Method for configuring a module (20) for industrial process automation for acquiring measured values (UL1,IL1) with a configuration tool (24) and subsequent operation of the module (20), in which case measured values (UL1,IL1) formed in the module (20) via an analogue-digital converter (3) are stored in a measured value dataset (DS1) or in a plurality of measured value datasets (DS1,...,DS4) via a microcontroller (1), and in addition further parameters or characteristic variables relating to the measured values (UL₁,IL₁) are calculated from the measured values (UL1,IL1) on the basis of calculation rules (BV) and said parameters or characteristic variables are likewise stored in the measured value datasets (DS1,...,DS4),
**characterised in that**
an identifier (ID) is shown in the configuration tool (25) for the measured value datasets (DS1,...,DS4) for each measured value (UL1,IL1) and parameter or characteristic variable, wherein the configurer (25) chooses data from a plurality of, possibly different, measured value datasets (DS1,...,DS4) and thus differently structured data sources and consolidates it into assignment tables (A, A') for user-defined data structures, and the user-defined data structures are saved, on the basis of a conversion rule (UV), in a process map memory (PA), by way of which they are read out.

6. Method according to claim 5, wherein a plurality of assignment tables (A, A') are used and the assignment tables are assigned an assignment table index (ZI), which is queried by a user, and as a result only the assignment table (A, A') queried via the assignment table index (ZI) in each case is copied into the process map memory (PA).

7. Method according to claim 5 or 6, wherein a graphical tool is used in the configuration tool (24) in order to make it possible for the configurer (25) to draw lines between fields of the data structure from the measured value datasets (DS1,...,DS4) to fields of the user-defined data structures and thus to form the conversion rule (UV) and/or the assignment tables (A, A').

## Revendications

1. Module (20) d'automatisation de processus industriel pour le relevé de valeurs (UL1, IL1) de mesure, comprenant,
une interface (2) de communication avec d'autres modules et/ou avec une commande (21) supérieure hiérarchiquement,
une micro-unité (1) de commande,
des bornes (1, 3 , 5 ; 2, 4, 6) pour des lignes de mesure,
au moins un convertisseur (3) analogique-numérique,
dans lequel la micro-unité (1) de commande est conformée pour mettre les valeurs (UL1, IL1) de mesure formées par l'intermédiaire du convertisseur (3) analogique-numérique en mémoire dans un ensemble (DS1) de données de valeur de mesure ou dans plusieurs ensembles (DS1,..., DS4) de données de valeur de mesure, dans lequel la micro-unité (1) de commande est conformée en outre pour calculer à partir des valeurs (UL1, IL1) de mesure à l'aide de prescriptions (BV) de calcul d'autres paramètres ou grandeurs caractéristiques concernant les valeurs (UL₁, IL₁) de mesure et pour mettre ceux-ci en mémoire dans les ensembles (DS1, ..., DS4) de données de valeur de mesure, **caractérisé en ce que**
des ensembles (DS1, ..., DS4) de données de valeur de mesure ont pour chaque valeur (UL1, IL1) de mesure des paramètres ou grandeurs caractéristiques, une identification (ID) et **en ce qu'**il y a une table (A) d'affectation de données cycliques et une table (B) d'affection de données acycliques, dans lequel l'interface (2) et la micro-unité (1) de commande sont conformées en outre de manière à pouvoir, par un outil (24) d'établissement de projet, charger une prescription (UV) de conversion établie par un projeteur (25) de manière à ce qu'en outre il puisse être produit, par la prescription (UV) de conversion, par une structure de données des ensembles (DS1, ..., DS4) de données de valeur de mesure, définie par l'utilisateur pour la table (A) d'affectation de données cycliques et une structure de données, définie par l'utilisateur, pour la table (B) d'affectation de données acycliques, dans lequel il y a une mémoire (PA) de reproduction de processus, de laquelle les structures de données définies par l'utilisateur peuvent être extraites, la micro-unité (1) de commande étant conformée en outre pour copier les données définies par l'utilisateur des tables (A, B) d'affectation dans la mémoire (PA) de reproduction de processus.

2. Module (20) suivant la revendication 1, comportant plusieurs tables (A, A') d'affectation de données cycliques et plusieurs tables (B, B') d'affectation de données acycliques, dans lequel les tables (A, A', B, B') d'affectation ont un index (ZI) de table d'affectation, qui peut être consulté par un utilisateur, la micro-unité (1) de commande étant à cet égard conformée, en outre, de manière à ne copier dans la mémoire (PA) de reproduction de processus que les tables (A, A') d'affectation consultées respectivement par l'index (ZI) de table d'affectation.

3. Module (20) suivant la revendication 1 ou 2, dans lequel il y a un dispositif (DBS) d'envoi de blocs de données, qui est conformé pour envoyer sur demande une structure de données spécifique à l'utilisateur, comme données acycliques, à partir de la table (B) d'affectation.

4. Module (20) suivant la revendication 3, dans lequel la structure de données spécifique à l'utilisateur est établie suivant le modèle de communication OPC UA.

5. Procédé d'établissement d'un projet d'un module (20) d'automatisation de processus industriel pour le relevé de valeurs (UL1, IL1) de mesure par un outil (24) d'établissement de projet et pour faire fonctionner ensuite le module (20), des valeurs (UL1, IL1) de mesure formées dans le module (20) par l'intermédiaire d'un convertisseur (3) analogique-numérique étant à cet égard mises en mémoire par une micro-unité (1) de commande dans un ensemble (DS1) de données de valeur de mesure ou dans plusieurs ensembles (DS1, ..., DS4) de données de valeur de mesure et d'autres paramètres ou grandeurs caractéristiques concernant les valeurs (UL1, IL1)de mesure étant calculés en outre à partir des valeurs (UL₁, IL₁) de mesure à l'aide de prescriptions (BV) de calcul et ces paramètres ou grandeurs caractéristiques étant également mis en mémoire dans les ensembles (DS1, ..., DS4) de données de valeur de mesure, **caractérisé en ce que**
l'on indique dans l'outil (25) d'établissement de projet, par rapport aux ensembles (DS1, ..., DS4) de données de valeur de mesure pour chaque valeur (UL1, IL1) de mesure et paramètre ou grandeur caractéristique, une indentification (ID),
dans lequel le projeteur (25) choisit des données dans plusieurs ensembles (DS1, ..., DS4) de données de valeur de mesure le cas échéant différents et ainsi des sources de données structurées de manière différente et les réunit dans des tables (A, A') d'affectation pour des structures de données définies par l'utilisateur et les structures de données définies par l'utilisateur sont mises, à l'aide d'une prescription (UV) de conversion, en mémoire dans une mémoire (PA) de reproduction de processus, de laquelle celles-ci sont extraites.

6. Procédé suivant la revendication 5, dans lequel on utilise plusieurs tables (A, A') d'affectation et on affecte aux tables d'affectation un index (ZI) de table d'affectation, qui est consulté par un utilisateur et ainsi seule la table (A, A') d'affectation consultée respectivement par l'intermédiaire de l'index (ZI) de table d'affectation est copiée dans la mémoire (PA) de reproduction de processus.

7. Procédé suivant la revendication 5 ou 6, dans lequel on utilise dans l'outil (24) d'établissement de projet, un outil graphique pour permettre au projecteur (25) de tirer des lignes des champs de la structure de données des ensembles (DS1,..., DS4) de données de valeur de mesure à des champs des structures de données définies par l'utilisateur et de former ainsi la prescription (UV) de conversion et ou les tables (A, A') d'affectation.
